# EUROPEAN PATENT SPECIFICATION

(11) **EP 3 158 873 B1**
(45) Date of publication and mention of the grant of the patent: **09.01.2019**
(21) Application number: 15809157.9
(22) Date of filing: 18.02.2015
(51) Int. Cl.: A23K 20/163, A23K 50/45, A23K 40/25, A23K 40/10

(54) **GRANULAR MATERIAL FOR PET FOODS, AND PET FOOD**
GRANULAT FÜR HAUSTIERFUTTER UND HAUSTIERFUTTER
MATÉRIAU GRANULAIRE POUR ALIMENTS POUR ANIMAUX DE COMPAGNIE, ET ALIMENT POUR ANIMAUX DE COMPAGNIE

(30) Priority: 18.06.2014 JP 2014125778
(43) Date of publication of application: 26.04.2017
(73) Proprietor: Unicharm Corporation, Ehime 799-0111 (JP)
(72) Inventor: MIYAMOTO Katsunori, Itami-shi Hyogo 664-0831 (JP); KANEHIRO Youko, Itami-shi Hyogo 664-0831 (JP); ISHIKAWA Arata, Itami-shi Hyogo 664-0831 (JP); KOBAYASHI Yosuke, Itami-shi Hyogo 664-0831 (JP)
(74) Representative: Dolleymores
(86) International application number: PCT/JP2015/054370
(87) International publication number: WO 2015/194208

(56) References cited:
- EP-A1- 0 812 545
- EP-A1- 1 523 892
- EP-A1- 2 116 135
- WO-A1-2007/091384
- FR-A1- 2 500 724
- GB-A- 1 088 138
- JP-A- H0 870 787
- JP-A- H05 276 882
- JP-A- 2006 158 265
- JP-A- 2009 268 415
- JP-A- 2009 517 060
- JP-A- 2012 178 980
- JP-A- 2013 240 297
- US-A- 4 410 551

## Description

### Technical Field

The present invention relates to a granular material for pet food and pet food using the same.

### Background Art

As pet food primarily for cats or dogs, so-called dry type pet food formed of a granular material having a water content of approximately 10% by weight or less is well known.

However, there is a problem in that dry type pet food is difficult to eat due to the hardness of the granular material. For example, at the time of eating food, dogs tend to swallow food without biting, but dry type pet food is difficult to swallow without biting because the granular material is hard. When dogs swallow the food after biting the granular material, the eating speed slows down so that the food intake is easily decreased.

PTL 1 describes puffed pellets in which the water content is increased to be in a range of 13 to 23% by mass, as pet food which is soft and easy to eat. This puffed pellet is a granular material produced by extrusion granulation of a mixture obtained by adding water to raw ingredients such as meat and starch and then puffing the mixture.

### Citation List

### Patent Literature

[PTL 1] Japanese Unexamined Patent Application, First Publication No. 2006-158265
EP 1523892 A1 relates to a pet's chew prepared from natural materials. It is prepared from a mixture of: a starch derivative and/or a branched polysaccharide; a plasticizer; and a fibrous material.
EP 0812545 A1 discloses a food product made by cooker-extrusion, said product being expanded, containing between 0.1 and 3% of a hydrocolloid or a mixture thereof and having a density comprised between 100 and 1,200 g/l.

### Summary of Invention

### Technical Problem

According to the findings of the present inventors, when the water content of a granular material for pet food becomes high, the granular material becomes soft, but there is a problem in that pellets are easily bound to each other at the time of extrusion granulation.

The present invention has been made in consideration of the above-described circumstances, and an object thereof is to provide a granular material for pet food which contains a large amount of water and in which binding of pellets at the time of extrusion granulation is suppressed; and pet food using the same.

### Solution to Problem

Aspects of the present invention are as follows.
[1] A granular material for pet food which is a puffed pellet having a shortest diameter and a longest diameter in the range of 3 to 20 mm, produced by extrusion granulation of a raw ingredient mixture , the granular material having a water content of 13 to 40% by mass,
   the raw ingredient mixture ((A) raw ingredients other than (B) + (B)) comprising:
   15 to 70% by mass of starch, with respect to the total content of the raw ingredients (A),
   1 to 25% by mass of liquid sugar, with respect to the total content of the raw ingredients (A), and
   0.05 to 1.0% by mass of alginic acid ester (B), with respect to 100% by mass of the raw ingredients (A) (i.e. the raw ingredient mixture other than the alginic acid ester).
[2] Pet food which contains the granular material for pet food according to [1] and a granular material for pet food which is different from the granular material. Advantageous Effects of Invention

According to the present invention, it is possible to obtain a granular material for pet food which contains a large amount of water and in which binding of pellets at the time of extrusion granulation is suppressed. Since the granular material for pet food of the present invention contains a larger amount of water than dry type pet food of the related art, the granular material for pet food is soft and easy to eat.

When the granular material for pet food is used, it is possible to provide pet food having pellets which are soft and easy to eat.

The reason why such effects can be obtained is not clear, but is considered as follows.

During the process of extrusion granulation of the granular material for pet food, a raw ingredient mixture containing water is subjected to a heat treatment while being kneaded and is formed in a granular shape by extruding the kneaded product from the outlet of an extrusion granulator and then cutting the product. It is considered pellets immediately after extrusion granulation are bound to each other since starch in the raw ingredient is gelatinized and eluted together with moisture when the raw ingredient mixture in the extrusion granulator is heated.

In the present invention, when the raw ingredient mixture contains a thickener and is heated in the extrusion granulator, viscous physical properties resulting from the thickener and shape retainability are obtained. As the results, gelatinization elution of starch in the raw ingredient is considered to be suppressed.

### Brief Description of Drawings

FIG. 1 is a photograph of a granular material for pet food obtained in a comparative example.
FIG. 2 is a photograph of a granular material for pet food obtained in an example.

### Description of Embodiments

In the present specification, the term "pets" indicates animals that have been bred by people. In a narrower sense, pets are animals being cared for by their owners. Further, the term "pet food" indicates feed for pets. The pet food of the present invention can be sold as "animal feed" or "animal food".

In the present specification, a granular material for pet food indicates a granular material used as a part or the entirety of the pet food.

In the present specification, the water content is a value obtained by the following measurement method.

An object to be measured is pulverized using a pulverizer so as to pass through a sieve having an opening diameter of 1 mm and then used as an analytical sample. 2 g to 5 g of the analytical sample is accurately weighed, put into an aluminum weighing dish (after the sample is dried in advance, the weight thereof is accurately weighed), dried at a temperature of 135 ± 2°C for 2 hours, and left to be cooled in a desiccator. Next, the weight thereof is accurately weighed, and then the water content is acquired from a difference between the weights weighed before and after the drying.

In the present specification, the water content of the granular material for pet food is a value obtained by measurement immediately after a pet food product produced by performing extrusion granulation, coating the granular material with an external additive if necessary, cooling the granular material to room temperature, and accommodating the granular material in a packaging container to be sealed is opened within 30 days from the date of manufacture or is a value obtained by measurement under the conditions similar to the conditions described above.

In the present specification, the value of water activity (Aw) of the granular material for pet food is a value obtained by measurement performed on a sample prepared by pulverizing the granular material for pet food at a measurement temperature of 25°C using a known water activity measuring device.

For example, the measurement can be carried out using a water activity measuring device "Novasina IC-500 AW-LAB (trade name, manufactured by DKSH Japan K.K.)".

In the present specification, the water activity (Aw) of the granular material for pet food is a value obtained by measurement immediately after a pet food product produced by performing extrusion granulation, coating the granular material with an external additive if necessary, cooling the granular material to room temperature, and accommodating the granular material in a packaging container to be sealed is opened within 30 days from the date of manufacture or is a value obtained by measurement under the conditions similar to the conditions described above.

### <Raw ingredient>

The granular material for pet food according to the present embodiment is produced by performing a process of extrusion granulation on a raw ingredient mixture.

### [Thickener]

The raw ingredient mixture contains a thickener.

In the present embodiment, the thickener indicates alginic acid ester.

In the present specification, a thickener is distinguished from raw ingredients other than the thickener in the raw ingredients constituting the raw ingredient mixture, the thickener is referred to as a thickener (B) and the raw ingredients are referred to as raw ingredients (A).

In the present specification, the content of the thickener (B) is expressed by a percentage (outer percentage) on a mass basis by setting the total mass of the raw ingredients (A) other than the thickener (B) to 100% by mass, and the unit thereof is described as "% by mass (outer percentage)".

The content of the thickener (B) is in a range of 0.05 to 1.0% by mass (outer percentage), preferably in a range of 0.1 to 0.5% by mass (outer percentage), and particularly preferably in a range of 0.1 to 0.3% by mass (outer percentage) with respect to the raw ingredient mixture other than the thickener (B), that is, 100% by mass of the raw ingredients (A).

In a case where the raw ingredient mixture contains two or more thickeners (B), the content of the thickeners (B) indicate the total content of these.

When the content of the thickener (B) is 0.05% by mass or greater (outer percentage), it is possible to sufficiently obtain the effect of suppressing binding of pellets after extrusion granulation, which is caused by the addition of the thickener (B).

Meanwhile, when the content of the thickener (B) is extremely large, the granular material for pet food tends to be hard. From the viewpoint that the granular material for pet food to be obtained is not excessively hard, the content of the thickener (B) is 1.0% by mass or less and preferably 0.5% by mass or less (outer percentage).

Alginic acid ester is a polysaccharide thickener and is used as the thickener (B).

Among polysaccharide thickeners, from the viewpoint that an excellent effect can be obtained even by addition of a small amount of a thickener, alginic acid ester is used.

The raw ingredient mixture contains liquid sugar, the granular material is unlikely to be puffed at the time of producing puffed pellets using the raw ingredient mixture, but the puffed stability can be improved by adding alginic acid ester.

The raw ingredient mixture contains liquid sugar and alginic acid ester, and the content of alginic acid ester is preferably in a range of 0.1 to 7 parts by mass and more preferably in a range of 0.3 to 3.5 parts by mass with respect to 100 parts by mass of liquid sugar.

### [Raw ingredients (A)]

Raw ingredients (A) as a raw ingredient mixture other than the thickener (B) include at least starch.

As a raw ingredient containing starch (hereinafter, referred to as a starch source), it is preferable to use at least one of cereals or starches.

Examples of cereals include corn, wheat, rice, barley, oats, and rye.

Examples of starches include wheat starch, corn starch rice starch, potato starch, tapioca starch, sweet potato starch, and sago starch. These starches may be unprocessed raw starches or processed starches to which a known chemical treatment (oxidation, esterification, or etherification) has been applied.

The starch source may be used alone or in combination of two or more kinds thereof.

The content of the starch source is in a range of 15 to 70% by mass with respect to the total content of the raw ingredients (A). In addition, excellent formability is obtained when the content thereof is 15% by mass or higher and excellent puffed stability is easily obtained when the content thereof is 70% by mass or less.

From the viewpoint of nutrition, it is preferable that the raw ingredients (A) include raw ingredients containing protein (hereinafter, also referred to as a protein source). Examples of the protein source include beans (whole soybeans and the like), vegetable protein (corn gluten meal, defatted soybean meal, and the like), meat (chicken, beef, pork, venison, and the like), meals (chicken meal, pork meal, beef meal, and mixed meal of these, and the like), and seafood (fish, meals (fish meal), and the like). The protein source may be used alone or in combination of two or more kinds thereof. The meals indicate powder products obtained by compressing and finely pulverizing meats or seafood.

It is preferable that the blending amount of the protein source is set according to the target nutritional composition of the granular material for pet food.

For example, the total content of protein sources is preferably in a range of 10 to 30% by mass, more preferably in a range of 15 to 25% by mass, and particularly preferably in a range of 18 to 22% by mass with respect to the total content of the raw ingredients (A).

The raw ingredients (A) include saccharides. When the raw ingredients (A) include saccharides, the palatability can be improved. Examples of the saccharides include sugar, glucose (dextrose), maltose, galactose, sucrose (saccharose), and fructose (levulose). The saccharides may be used in the powdery form or in the liquid form (liquid sugar).

The saccharides may be used alone or in combination of two or more kinds thereof.

The total content of the saccharides is preferably in a range of 5 to 25% by mass, more preferably in a range of 10 to 20% by mass, and particularly preferably in a range of 15 to 18% by mass with respect to the total content of the raw ingredients (A).

Among saccharides, liquid sugar is particularly preferable since liquid sugar is sugar, contributes to improvement of palatability, and can reduce the water activity. Further, liquid sugar has an advantage that scorching is unlikely to occur during a heating process. Moreover, when the amount of liquid sugar to be added is excessively large, the puffed stability during production of puffed pellets may be degraded in some cases.

The raw ingredients (A) include liquid sugar, and the content of the liquid sugar is in a range of 1 to 25% by mass, preferably in a range of 3 to 20% by mass, and particularly preferably in a range of 13 to 17% by mass with respect to the total amount of the raw ingredients (A). The content of the liquid sugar here indicates the content obtained by conversion into liquid sugar having a sugar concentration of 75% by mass.

It is preferable that the raw ingredients (A) include a humectant. A humectant is a component added for holding water in the granular material for pet food and reducing the water activity. Specifically, a humectant is one or more kinds selected from the group consisting of propylene glycol, glycerin, and sugar alcohol (sorbitol, maltitol, or the like).

It is preferable that the blending amount of the humectant is set according to the water activity of the target granular material for pet food.

For example, the total content of the humectant is preferably in a range of 2 to 15% by mass, more preferably in a range of 4 to 12% by mass, and particularly preferably in a range of 5 to 8% by mass with respect to the total content of the raw ingredients (A).

It is preferable that the raw ingredients (A) include oils and fats because the granular material for pet food is easily softened.

The oils and fats may be vegetable oils and fats or animal oils and fats. The oils and fats may be used alone or in combination of two or more kinds thereof. The oils and fats may be in the form of a liquid at room temperature or in the form of a solid at room temperature. The oils and fats in the form of a solid may be heated if necessary for use.

From the viewpoint of easily obtaining high palatability, it is preferable that the oils and fats include vegetable oils and fats. Examples of the animal oils and fats include chicken oil, lard, beef tallow (fat), and milk fats and oils. The animal oils and fats may be used alone or in combination of plural kinds thereof.

The content of the animal oils and fats is preferably 50% by mass or greater, more preferably 70% by mass or greater, and may be 100% by mass with respect to the total amount of oils and fats.

In a case where the raw ingredients (A) includes oils and fats, the content of the oils and fats is preferably in a range of 1 to 15% by mass and more preferably in a range of 1 to 7% by mass with respect to the content of the raw ingredients (A).

In a case where the raw ingredients (A) include oils and fats, it is preferable that the raw ingredients (A) include an emulsifier from the viewpoint of easily obtaining a uniform mixed state in the raw ingredient mixture. Specifically, an emulsifier which can be used as a food additive can be used, and examples thereof include sorbitan fatty acid ester, sugar ester, and glycerin fatty acid ester. The emulsifier may be used alone or in combination of two or more kinds thereof.

In a case where the raw ingredients (A) include an emulsifier, the amount of the emulsifier to be added is preferably in a range of 0.01 to 10% by mass and more preferably in a range of 0.1 to 1% by mass with respect to the total amount of liquid raw ingredients (including oils and fats).

Apart from this, the amount of an emulsifier to be added is preferably in a range of 0.01 to 3% by mass and more preferably in a range of 0.1 to 1% by mass with respect to the total amount of powdery raw ingredients (not including an external additive) used by mixing into the granular material for pet food at the time of production. As an emulsifier added to the powdery raw ingredients, an emulsifier (such as glycerin fatty acid ester) having an anti-aging effect of starch is preferable.

The total content of the emulsifier is preferably 5% by mass or less and more preferably 2% by mass or less with respect to the entirety of the granular material for pet food.

The raw ingredients (A) are blended with water (added water). The added water does not indicate water contained in the raw ingredients but indicates water additionally added to the raw ingredients. The amount of water to be blended (added water) is set such that the water content of the granular material for pet food becomes a target value.

As other components other than the above-described components, known components in the field of pet food may be included in the raw ingredients (A).

Examples thereof include vegetables and additives (such as vitamins, minerals, an amino acid, an organic acid, flavoring materials, fibers, colorants, palatability enhancers, and preservatives).

The raw ingredients (A) contains 15 to 70% by mass of a starch source, 10 to 30% by mass of a protein source, 5 to 25% by mass of total saccharides (including 1 to 25% by mass of liquid sugar), 2 to 15% by mass of a humectant, and added water in accordance with the water content of a product. Further, the total content of these is in a range of 75 to 100% by mass and it is preferable that the remainder is formed of other components blended with each other.

### <Method of producing granular material for pet food>

In order to produce the granular material for pet food according to the present embodiment, first, the raw ingredients (A) are mixed with the thickener (B) to obtain a raw ingredient mixture and then the raw ingredient mixture is formed in a granular shape by extrusion granulation.

Among the raw ingredients (A), raw ingredients used in the powdery form are pulverized if necessary and then mixed with each other. Alternatively, the raw ingredients may be mixed with each other while being pulverized using a grinder or the like. Raw ingredients used in a liquid state are mixed with the raw ingredients in the powdery form to obtain the raw ingredients (A).

The mixing order when the raw ingredients (A) are mixed with the thickener (B) to obtain the raw ingredient mixture is not particularly limited. For example, a part of the raw ingredients (A) and the thickener (B) are mixed with each other to obtain a mixture and then the mixture may be mixed with the remainder of the raw ingredients (A).

A method of forming the raw ingredient mixture in a granular shape is not limited as long as the raw ingredient mixture is formed by extrusion granulation. As the method thereof, a method of obtaining puffed pellets by performing a puffing process or a method of obtaining non-puffed pellets by extrusion granulation without performing a puffing process.

The "puffing process" indicates a process of generating a gas in the inside of the raw ingredient mixture using a technique of carrying out heating, fermentation, a chemical reaction, or pressure reduction. In the puffing process, when a gas is generated, the volume of the raw ingredient mixture is increased so as to have porous properties. Further, when the volume of the raw ingredient mixture is increased, the bulk density thereof is decreased. Before, after, or at the same time with the puffing process, puffed pellets are obtained by forming the raw ingredient mixture in a granular shape.

From the viewpoint of easily obtaining excellent softness in the granular material for pet food, puffed pellets are more preferable than non-puffed pellets.

In the process of extrusion granulation, it is preferable that the raw ingredient mixture is subjected to a heat treatment. It is preferable that the heat treatment is carried out under the condition in which starch in the raw ingredient mixture is pregelatinized. When starch is pregelatinized, digestibility of the granular material for pet food is improved. The temperature of the heat treatment is preferably 150°C or lower, more preferably in a range of 50°C to 120°C, and still more preferably in a range of 80°C to 100°C. The time for the heat treatment is preferably in a range of 1 minute to 20 minutes, more preferably in a range of 2 minutes to 20 minutes, and still more preferably in a range of 3 minutes to 6 minutes. When the treatment temperature and the treatment time are respectively in the above-described range, it is possible to prevent raw ingredients from being excessively heated and to sufficiently obtain the effect of improving digestibility due to pregelatinization of starch.

Specifically, the raw ingredient mixture is subjected to a heat treatment while being kneaded in a extrusion granulator and is formed in a granular shape by extruding the kneaded product from the outlet of the extrusion granulator and then cutting the product. The kneaded product to which the heat treatment has been applied is formed in a granular shape by extrusion granulation in a state of a high temperature without being cooled, and is cooled to room temperature, thereby obtaining a granular material for pet food.

In a case of producing puffed pellets, it is preferable to use an extruder as the extrusion granulator. As a method of producing puffed pellets using an extruder, for example, a method described in "Small Animal Clinical Nutrition 4th Edition" (edited by Micheal S. Hand, Craig D. Thatcher, Rebbecca L. Remillard, and Philip Roudebusg, published by Mark Morris Associates; 2000; p 157 to 190) can be used.

An example of a method of producing puffed pellets using an extruder will be described. First, the raw ingredient mixture obtained mixing the raw ingredients (A) with the thickener (B) in advance is put into the extruder, and heated and pressed while being kneaded, and then the kneaded product is extruded from the outlet.

A plate in which a hold having a predetermined shape is formed and a cutter which cuts the kneaded product extruded from the hole of the plate to have a predetermined length (thickness) are provided on the outlet of the extruder. The kneaded product is extruded from the hole of the plate, formed in a predetermined granular shape by being cut with the cutter, and released to the atmospheric pressure from the pressurized state. In this manner, water vapor in the kneaded product is expanded and pellets are puffed, thereby obtaining puffed pellets (granular material for pet food) in a porous state.

### <Granular material for pet food>

The shape and the size of the granular material for pet food are not particularly limited as long as the shape and the size are suitable for a pet to eat. In a case where the granular material is stored in a tank or the like during the process of being produced after formation, it is preferable that the granular material has a shape which is unlikely to collapse.

In a case of non-puffed pellets, the shape and the size of the granular material for pet food are determined by the shape and the size of the hole through which the kneaded product is extruded and the length (thickness) of the extruded kneaded product being cut. In a case of puffed pellets, the shape and the size of the granular material for pet food are easily changed by the degree of puffing.

As the shape of the hole through which the kneaded product is extruded, a circular shape, an elliptical shape, a polygonal shape, a donut shape, a heart shape, a star shape, and a fish shape may be exemplified.

From the viewpoint that the granular material is unlikely to collapse in a tank or the like, a circular shape is particularly preferable from among the shapes described above.

Regarding the size of the granular material for pet food, the shortest diameter and the longest diameter of the puffed pellets are in a range of 3 to 20 mm, the shortest diameters and the longest diameters of both of the puffed pellets and non-puffed pellets are preferably in a range of 3 to 20 mm, more preferably in a range of 4 to 12 mm, and still more preferably in a range of 5 to 10 mm.

The water content of the granular material for pet food is in a range of 13 to 40% by mass. When the water content thereof is 13% by mass or greater, it is possible to sufficiently obtain an effect of improving the property which makes the pet food easy to be eaten by a pet because of an increase in water content, compared to dry type pet food. When the water content is 40% by mass or less, excellent shape retainability of pellets may be easily obtained.

The water activity (Aw) of the granular material for pet food is preferably 0.87 or less, more preferably 0.85 or less, and particularly preferably 0.80 or less. When the water activity thereof is the upper limit or less, a bacteriostatic action (action of suppressing the growth of bacteria) can be sufficiently obtained. The lower limit of the water activity (Aw) is not particularly limited, but practically 0.5 or greater.

Preferably, the granular material for pet food according to the present embodiment does not have softness which allows the granular material to be plastically deformed like clay but has elasticity which allows the granular material not to collapse due to a stress applied to some extent. Specifically, the breaking strength resulting from a measurement method described below is preferably in a range of 1 to 20 N, more preferably in a range of 2 to 18 N, and particularly preferably in a range of 4 to 14 N.

### <Pet food>

A predetermined amount of the granular material for pet food which is cooled after extrusion granulation is accommodated and sealed in a packaging container, thereby obtaining pet food. As the packaging container, a container which can hold the water content is used.

The granular material for pet food according to the present embodiment may be mixed with a different granular material for pet food, and accommodated and sealed in a packaging container to obtain pet food. The expression "different granular material for pet food" indicates a granular material for pet food (also including small pieces) which is not included in the granular material for pet food according to the present embodiment. For example, a granular material for pet food which is formed using a method of forming the granular material in a sheet shape and then cutting the granular material into a plate shape can be used. The water content of the "different granular material for pet food" is preferably in a range of 13 to 40% by mass.

It is preferable that the granular material for pet food or pet food produced using the method according to the present embodiment is food for dogs.

In order to inform a pet owner that the granular material for pet food according to the present embodiment is pet food suitable for dogs, it is possible to sell the product in a state in which an instruction that the pet food is suitable for dogs is displayed on the package when the pet food of the present embodiment is packaged and sold.

### [Examples]

The present invention will be described in detail using the following examples, but the present invention is not limited thereto.

### (Examples 1 to 9)

Examples 1 and 5 to 9 are comparative examples and Examples 2 to 4 are examples according to the invention.

The composition of the raw ingredient (A) other than the thickener (B) was as listed in Table 1. The type of thickener (B) and the amount thereof to be added in each example were as listed in Table 2. Liquid sugar having a sugar concentration of 75% by mass was used (the same applies to hereinafter).

First, raw ingredients excluding water from the raw ingredient (A) and the thickener (B) were mixed with each other, water was added thereto, and the mixture was further mixed to obtain a raw ingredient mixture.

The obtained raw ingredient mixture was put into an extruder and subjected to a heat treatment at a temperature of 115°C ± 15°C for approximately 2 minutes while being kneaded so that a starch component was pregelatinized, and then extruded and granulated into a granular shape from the outlet of the extruder and puffed at the same time with the extrusion granulation. At the outlet of the extruder, the kneaded product was extruded in a cylindrical shape from a round hole having a diameter of 6.8 mm and was cut with a cutter in a granular shape such that the thickness of the cylinder became 6 mm.

The obtained pellets were cooled at room temperature (25°C), thereby obtaining puffed pellets (granular material for pet food).

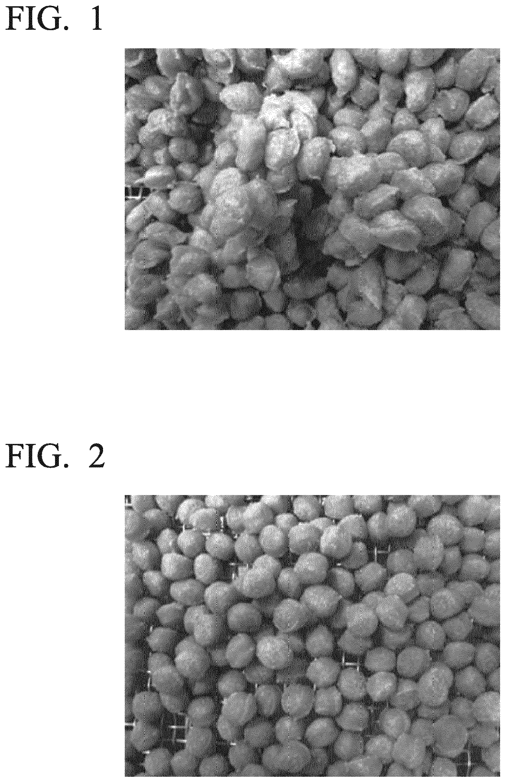

FIG. 1 is a photograph of the granular material for pet food obtained in Example 1 and FIG. 2 is a photograph obtained in Example 2. The frequency of binding of granular materials for pet food obtained in Examples 3 to 9 was different from that of the granular material for pet food obtained in Example 2, but the appearance of pellets was substantially the same as in the photograph of FIG. 2.

### <Evaluation method>

The granular materials for pet food cooled at room temperature for 12 hours immediately after the extrusion granulation were evaluated using the following method. The results thereof are listed in Table 1.

### [Water content and water activity (Aw)]

The water content and water activity (Aw) of the granular materials for pet food were measured using the above-described method.

### [Formation defect rate and formability]

1 kg of the granular material for pet food was weighed, and granules which were bound with each other and granules with flat deformation were selected as granules having a formation defect. The total mass of the granules having a formation defect was weighed and the percentage with respect to 1 kg of the granular material for pet food was set as a formation defect rate (unit: %).

The "formability" was evaluated such that a case where the value of the formation defect rate was 5% or less was evaluated as A (formability was excellent), a case where the value of the formation defect rate was 5% or greater and less than 30% was evaluated as B (possible to form), and a case where the value of the formation defect rate was greater than 30% was evaluated as C (impossible to form).

### [Compression tester (measurement of breaking stress)]

The breaking stress at the time when the granular material for pet food was compressed at a constant compression rate was measured under the following conditions using a compression tester (TEXTUROMETER, model No: GTX-2, manufactured by ZENKEN CORPORATION).
Plunder: cylindrical plunger having diameter of 3 mm
Platform: flat dish
Compression rate: LOW
Lowest point of plunger: 3 mm (gap between flat dish and plunger)
Measurement temperature: 25°C

That is, one granule from the granular material for pet food to be measured was placed on the flat dish and the stress was measured while a plunger was vertically pressed from the top of the granule at a constant rate. The peak value (maximum value) of the stress was read as the value of the breaking stress. The measurement was repeated with respect to 10 granules and the average value of the obtained values was acquired.

The numerical value unit of the breaking hardness was converted into newton (N) by multiplying the numerical value of the breaking stress (unit: kgw) measured using the above-described compression tester by 9.8, and the results are listed in the tables.

Further, measurement of the breaking stress was not carried out with respect to Example 1 in which the evaluation of the formability was C (impossible to form).

**[Table 1]**

| Raw ingredient (A) [% by mass] | | Examples 1 to 9 |
|---|---|---|
| Powdery raw ingredients | Starch source (cereals) | 35.85% |
| | Protein source | 20.00% |
| | Saccharides | 4.15% |
| | Calcium adjusting agent | 3.00% |
| Liquid raw ingredients | Liquid sugar (fructose glucose liquid sugar) | 15.00% |
| | Beef tallow | 3.20% |
| | Emulsifier | 0.10% |
| | Humectant | 6.50% |
| | Water (added water) | 12.20% |
| Total | | 100.00% |

**[Table 2]**

| | | | Example 1 | Example 2 | Example 3 | Example 4 | Example 5 | Example 6 | Example 7 | Example 8 | Example 9 |
|---|---|---|---|---|---|---|---|---|---|---|---|
| Raw ingredient mixture | Raw ingredient (A) [% by mass] | | 100.00 | 100.00 | 100.00 | 100.00 | 100.00 | 100.00 | 100.00 | 100.00 | 100.00 |
| | Thickener (B) [% by mass (outer percentage)] | Alginic acid ester | 0 | 0.10 | 0.50 | 1.00 | | | | | |
| | | Xanthane gum | | | | | 0.50 | | | | |
| | | Pectin | | | | | | 0.50 | | | |
| | | CMC | | | | | | | 0.50 | | |
| | | Carrageenan | | | | | | | | 0.50 | |
| | | Guar gum | | | | | | | | | 0.50 |
| Granular material for pet food | Water content [% by mass] | | 25.6 | 25.2 | 25.4 | 25.5 | 25.0 | 25.3 | 25.5 | 25.2 | 25.3 |
| | Water activity (Aw) | | 0.80 | 0.78 | 0.78 | 0.77 | 0.77 | 0.78 | 0.80 | 0.78 | 0.79 |
| | Evaluation results | Formation defect rate [%] | 68.8 | 1.1 | 1.7 | 2.7 | 4.3 | 1.4 | 1.1 | 11.6 | 15.0 |
| | | Formability | C | A | A | A | A | A | A | B | B |
| | | Average value [N] of breaking stress | - | 12.32 | 15.93 | 15.97 | 14.48 | 15.63 | 15.56 | 12.42 | 12.79 |
| | | Standard deviation [N] of breaking stress | - | 0.69 | 0.94 | 0.85 | 1.23 | 1.42 | 0.84 | 0.69 | 0.73 |
| | | Photographs | FIG. 1 | FIG. 2 | - | - | - | - | - | - | - |

As shown from the results of Table 2, in Examples 2 to 9 in which the raw ingredient mixture contained the thickener (B), binding of granules at the time of extrusion granulation was prevented in an excellent manner and the formability was excellent even though the water content of the granular material for pet food was approximately 25% by mass, which was high. Further, the granular material for pet food was sufficiently soft.

Meanwhile, in Example 1 in which the raw ingredient mixture did not contain the thickener (B), the water content of the granular material for pet food was approximately 25% by mass, which was high, and binding of granules at the time of extrusion granulation occurred and thus this case was determined as a production defect.

### (Examples 10 and 11)

Example 10 is an example and Example 11 is a comparative example.

In Example 10, 1.0% by mass (outer percentage) of alginic acid ester was added to 100% by mass of the raw ingredients (A). In Example 11, alginic acid ester was not added and the amount of added water was adjusted to be smaller than that of Example 10. The granular materials for pet food were evaluated using the following method. The results are listed in Table 4.

### [Water content and water activity (Aw)]

The granular materials for pet food were accommodated in packaging containers and produced in a sealed product form. The water contents after 1 day from the date of manufacture and the water contents after 46 days therefrom were measured using the above-described method.

### [Formation defect rate and formability]

Formability was evaluated using the above-described method immediately after the production of the granular materials for pet food.

### [Compression test (measurement of breaking stress)]

The breaking stress was measured using the above-described method. In this case, the lowest point of the plunger was set to 1 mm. The results obtained after 14 days and 30 days from the date of manufacture are listed in the tables.

### [Evaluation of palatability (kennel test)]

The palatability of dogs for the produced granular materials for pet food was evaluated using the following method.

When the degree of palatability for a granular material for pet food of each example, obtained by the following evaluation method, was set to A and the degree of palatability for the granular material for pet food of the comparative example, obtained by the following evaluation method, was set to B, the ratio of A to B (A + B = 100) is listed in Table 4. For example, the palatability result after 1 day from the data of manufacture of Examples 10 and 11 was "66:34". This indicates that the degree of palatability for the granular material for pet food of Example 10 was 66 and the degree of palatability for the granular material for pet food of Example 11 for comparison was 34.

The method of evaluating palatability is as follows.

First, the granular material for pet food (hereinafter, simply referred to as pet food) of Example 10 was set as a test pet food and the pet food of Example 11 was set as a comparison pet food. 20 small dogs were monitored and the test was carried out for two days. As small dogs, Dachshund, Pomeranian, Toy Poodle, Yorkshire Terrier, and Papillon were used.

On the first day, a predetermined amount of test pet food and comparison pet food were fed to each dog at the same time, one from the left side and the other from the right side, and then each amount of pet food eaten by a dog was measured after a predetermined time. 100 g of pet food was fed to each dog. The amount of pet food eaten by a dog was measured after 60 minutes from the time point when pet food was fed to a dog.

The amount of ingested test pet food and the amount of ingested comparison pet food were acquired in terms of the percentage based on the total weight of the pet food eaten by one dog for the first day. The percentages obtained from 20 dogs being monitored were averaged and set as the result of the first day.

On the second day, 100 g of test pet food and comparison pet foodwere fed to each dog at the same time, one from the right side and the other from the left side, and then each amount of pet food eaten by a dog was measured after one hour.

The amount of ingested test pet food and the amount of ingested comparison pet food were acquired in terms of the percentage based on the total weight of the pet food eaten by one dog for the second day. The percentages obtained from 20 dogs being monitored were averaged and set as the result of the second day.

Finally, the results of the first and second days were averaged, and the ratios (A:B described above) of the amounts of ingested pet food as the final results were acquired as numerical values showing the degrees of palatability. It is indicated that a dog being monitored ate the pet food with a good appetite as the numeric value of the preference is higher.

**[Table 3]**

| Raw ingredients (A) [part by mass] | | Example 10 | Example 11 |
|---|---|---|---|
| Powdery raw ingredients | Starch source (cereals) | 34.00 | 34.00 |
| | Protein source | 18.50 | 18.50 |
| | Saccharides | 5.20 | 5.20 |
| | Emulsifier | 0.50 | 0.50 |
| | Palatability enhancer | 0.80 | 0.80 |
| | Minerals | 3.70 | 3.70 |
| | Preservatives | 0.33 | 0.33 |
| | Other additives | 0.38 | 0.38 |
| Liquid raw ingredients | Liquid sugar (fructose glucose liquid sugar) | 15.00 | 15.00 |
| | Beef tallow | 3.20 | 3.20 |
| | Emulsifier | 0.10 | 0.10 |
| | Humectant | 6.50 | 6.50 |
| | Water (added water) | 8.00 | 5.00 |
| External additive | Beef tallow | 3.00 | 3.00 |
| | Palatability enhancer | 1.90 | 1.90 |
| Total | | 101.11 | 98.11 |

**[Table 4]**

| | | | Example 10 | Example 11 |
|---|---|---|---|---|
| Raw ingredient mixture | Raw ingredient (A) [% by mass] | | 100.00 | 100.00 |
| | Thickener (B) Alginic acid ester [% by mass (outer percentage)] | | 0.10 | 0 |
| Granular material for pet food | Water content [% by mass] | After 1 day | 25.3 | 21.2 |
| | | After 46 days | 25.3 | 21.2 |
| | Water activity (Aw) | After 1 day | 0.76 | 0.64 |
| | | After 46 days | 0.76 | 0.64 |
| | Formability | | A | A |
| | Average value [N] of breaking stress | After 14 days | 8.09 | 17.40 |
| | | After 30 days | 8.70 | 16.90 |
| | Kennel test | After 1 day | 66:34 | |
| | | After 46 days | 69:31 | |

As shown from the results of Table 4, the granular material for pet food of Example 10 had excellent formability even though the water content was as high as approximately 25% by mass, and the obtained granular material for pet food was sufficiently soft.

On the other hand, the granular material for pet food of Example 11 had excellent formability since the water content thereof was as low as approximately 21% by mass, even though alginic acid ester was not added thereto. Further, the breaking stress of the granular material for pet food of Example 11 was high and the pet food of Example 10 had higher palatability than the pet food of Example 11 in the palatability test (kennel test) performed with respect to the pet food of Examples 10 and 11.

Hereinbefore, preferred examples of the present invention have been described, but the present invention is not limited thereto. Addition, omission, substitution, and other modifications of configurations are possible within the range not departing from the scope of the present invention. Further, the present invention is not limited by the description above and only limited by the range of claims.

### Industrial Applicability

The granular material for pet food of the present invention contains a large amount of water and binding of pellets at the time of extrusion granulation is suppressed. Further, since the granular material for pet food of the present invention contains a larger amount of water that dry type pet food of the related art, the granular material is soft and easy to eat. Therefore, the present invention is greatly useful industrially.

## Claims

1. A granular material for pet food which is a puffed pellet having a shortest diameter and a longest diameter in the range of 3 to 20 mm, produced by extrusion granulation of a raw ingredient mixture , the granular material having a water content of 13 to 40% by mass,
the raw ingredient mixture ((A) raw ingredients other than (B) + (B)) comprising:
15 to 70% by mass of starch, with respect to the total content of the raw ingredients (A)
1 to 25% by mass of liquid sugar, with respect to the total content of the raw ingredients (A) and
0.05 to 1.0% by mass of alginic acid ester (B), with respect to 100% by mass of the raw ingredients (A) (i.e. the raw ingredient mixture other than the alginic acid ester).

2. Pet food which contains the granular material for pet food according to claim 1 and a granular material for pet food which is different from the granular material.

## Patentansprüche

1. Granuläres Material für Haustierfutter, das ein aufgeblähtes Pellet ist, das einen kürzesten Durchmesser und einen längsten Durchmesser im Bereich von 3 bis 20 mm aufweist, durch Extrusionsgranulierung einer Rohstoffmischung hergestellt wird, wobei das granuläre Material einen Wassergehalt von 13 bis 40 Masse-% aufweist,
wobei das Rohstoffmischungsmaterial, Rohstoffe (A) und Alginsäureester (B) umfasst:
15 bis 70 Masse-% Stärke, bezogen auf den Gesamtgehalt der Rohstoffe (A),
1 bis 25 Masse-% flüssigen Zucker, bezogen auf den Gesamtgehalt der Rohstoffe (A), und
0,05 bis 1,0 Masse-% Alginsäureester (B), bezogen auf 100 Masse-% der Rohstoffe (A), die die Rohstoffmischung mit Ausnahme des Alginsäureesters sind.

2. Haustierfutter, das das granuläre Material für Haustierfutter nach Anspruch 1 und ein granuläres Material für Haustierfutter, das sich von dem granulären Material unterscheidet, enthält.

## Revendications

1. Matériau granulaire pour aliments pour animaux de compagnie qui est un granulé soufflé dont un diamètre le plus court et un diamètre le plus long sont dans la plage de 3 à 20 mm et qui est produit par extrusion-granulation d'un mélange d'ingrédients crus, le matériau granulaire ayant une teneur en eau qui va de 13 à 40 % en masse,
le matériau mélange d'ingrédients crus comprenant des ingrédients crus (A) et un ester de l'acide alginique (B) :
de 15 à 70 % en masse d'amidon, le pourcentage étant rapporté à la teneur totale en les ingrédients crus (A)
de 1 à 25 % en masse d'un sucre liquide, le pourcentage étant rapporté à la teneur totale en les ingrédients crus (A) et
de 0,05 à 1,0% en masse d'un ester de l'acide alginique (B) pour 100 % en masse des ingrédients crus (A), correspondant au mélange d'ingrédients crus autres que l'ester de l'acide alginique.

2. Aliments pour animaux de compagnie qui contient le matériau granulaire pour aliments pour animaux de compagnie selon la revendication 1 et un matériau granulaire pour aliments pour animaux de compagnie qui est différent du matériau granulaire.
